# EUROPEAN PATENT APPLICATION

(11) **EP 4 686 921 A1**
(43) Date of publication of application: **04.02.2026**
(21) Application number: 25158566.7
(22) Date of filing: 18.02.2025
(51) Int. Cl.: G01H 3/00

(54) **ELECTRONIC DEVICE**

(30) Priority: 30.07.2024 JP 2024123472
(71) Applicant: Fujifilm Business Innovation Corp., Tokyo 107-0052 (JP)
(72) Inventor: YOSHITSUGU, Koji, Yokohama (JP); UDAKA, Tsutomu, Yokohama (JP); SUGI, Shinsuke, Yokohama (JP)
(74) Representative: Meissner Bolte Partnerschaft mbB

(57) **Abstract**

An electronic device includes: a noise source that produces an operational noise; a frame accommodating and supporting the noise source and having an opening leading to a space accommodating the noise source; a noise sensor that is provided outside the frame and collects noise from the noise source through the opening; a covering part covering the noise sensor and the opening at least when viewed from an outside of an apparatus; and an exterior cover that covers an outer side of the covering part.

## Description

### Background

### (i) Technical Field

The present disclosure relates to an electronic device.

### (ii) Related Art

Japanese Unexamined Patent Application Publication No. 2009-249046 discloses a sheet transport device including: multiple acousto-electric transducers arranged at predetermined intervals in a sheet transport path; a normal noise storage unit that stores normal noise generated at the positions of the acousto-electric transducers when sheet transport is normal; a comparison noise recording unit that records comparison noise generated at the positions of the acousto-electric transducers when sheet transport is abnormal; and a transport abnormality specifying unit. The transport abnormality specifying unit specifies the position of the transport abnormality in the transport path range on the basis of the difference between the normal noise stored in the normal noise storage unit and the comparison noise recorded in the comparison noise recording unit.

### Summary

Sometimes, multiple noise sensors are installed inside an image forming apparatus to detect noise from a noise source, such as a drive system, to analyze the cause of abnormality. At this time, if a noise sensor is installed near a noise source, the operational noise is too loud, making it difficult to detect unusual noise. Hence, it is necessary to install the noise sensor appropriately away from the noise source.

However, if the noise sensor is installed near the exterior cover, the noise sensor detects noise outside the apparatus.

Accordingly, it is an object of the present disclosure to provide an electronic device capable of reducing the influence of noise outside the apparatus, compared with the case where the noise sensor is not covered by a covering part provided inside the exterior cover.

According to a first aspect of the present disclosure, there is provided an electronic device including: a noise source that produces an operational noise; a frame accommodating and supporting the noise source and having an opening leading to a space accommodating the noise source; a noise sensor that is provided outside the frame and collects noise from the noise source through the opening; a covering part covering the noise sensor and the opening at least when viewed from an outside of an apparatus; and an exterior cover that covers an outer side of the covering part.

According to a second aspect of the present disclosure, in the electronic device according to the first aspect, a space between the covering part and the exterior cover is used as an air flow path.

According to a third aspect of the present disclosure, the electronic device according to the second aspect further includes a fan that discharges air in the air flow path to the outside of the apparatus.

According to a fourth aspect of the present disclosure, in the electronic device according to any one of the first to third aspects, the covering part has a shape that reflects the noise collected through the opening to the noise sensor.

According to a fifth aspect of the present disclosure, in the electronic device according to the fourth aspect, the covering part has a shape including a part of an ellipsoid.

According to a sixth aspect of the present disclosure, in the electronic device according to the fifth aspect, the noise sensor and the opening are respectively disposed at two focal positions of the covering part having a shape including a part of an ellipsoid.

According to a seventh aspect of the present disclosure, in the electronic device according to the fourth aspect, the covering part has a shape including a part of a sphere, the opening includes a plurality of openings, and the noise sensor collects the noise from the noise source through the plurality of openings.

According to an eighth aspect of the present disclosure, in the electronic device according to the fourth aspect, the covering part has a shape including a part of a polyhedron.

According to a ninth aspect of the present disclosure, in the electronic device according to the seventh or eighth aspect, the noise sensor is disposed at a position where the noise entering through the opening and reflected by the covering part is collected.

According to a tenth aspect of the present disclosure, in the electronic device according to any one of the fourth to ninth aspects, the noise sensor includes a noise collection part that collects noise, and the noise collection part is disposed at a position different from a position of the opening.

According to the electronic device of the first aspect, it is possible to reduce the influence of the noise outside the apparatus, compared with the case where the noise sensor is not covered by the covering part provided inside the exterior cover.

According to the electronic device of the second aspect, it is possible to reduce the influence of the noise outside the apparatus, compared with the case where the air flow path is not formed between the noise sensor and the exterior cover.

According to the electronic device of the third aspect, it is possible to reduce the influence of the noise outside the apparatus while cooling the inside of the apparatus.

According to the electronic device of the fourth aspect, it is easy to collect noise from the noise source, compared with the case where the shape of the covering part is not considered.

According to the electronic device of the fifth aspect, it is easy to collect noise from the noise source, compared with the case where the shape of the covering part is not considered.

According to the electronic device of the sixth aspect, it is easy to collect noise from the noise source, compared with the case where the position where the noise sensor is disposed is not considered.

According to the electronic device of the seventh aspect, it is easy to collect noise from the noise source, compared with the case where the shape of the covering part is not considered.

According to the electronic device of the eighth aspect, it is easy to collect noise from the noise source, compared with the case where the shape of the covering part is not considered.

According to the electronic device of the ninth aspect, it is easy to collect noise from the noise source, compared with the case where the position where the noise sensor is disposed is not considered.

According to the electronic device of the tenth aspect, even when the noise collection part is disposed at a position different from the position of the opening, it is easy to collect the noise from the noise source.

### Brief Description of the Drawings

Exemplary embodiment of the present disclosure will be described in detail based on the following figures, wherein:
Fig. 1 schematically illustrates the structure of an image forming apparatus according to an exemplary embodiment of the present disclosure;
Fig. 2 schematically illustrates a noise sensor and the vicinity thereof according to the exemplary embodiment of the present disclosure;
Figs. 3A and 3B illustrate modifications of the noise sensor and the vicinity thereof according to the exemplary embodiment of the present disclosure;
Figs. 4A and 4B illustrate modifications of the noise sensor and the vicinity thereof according to the exemplary embodiment of the present disclosure; and
Figs. 5A and 5B illustrate an installation example of the noise sensor according to the exemplary embodiment of the present disclosure.

### Detailed Description

Next, an exemplary embodiment of the present disclosure will be described in detail with reference to the drawings.

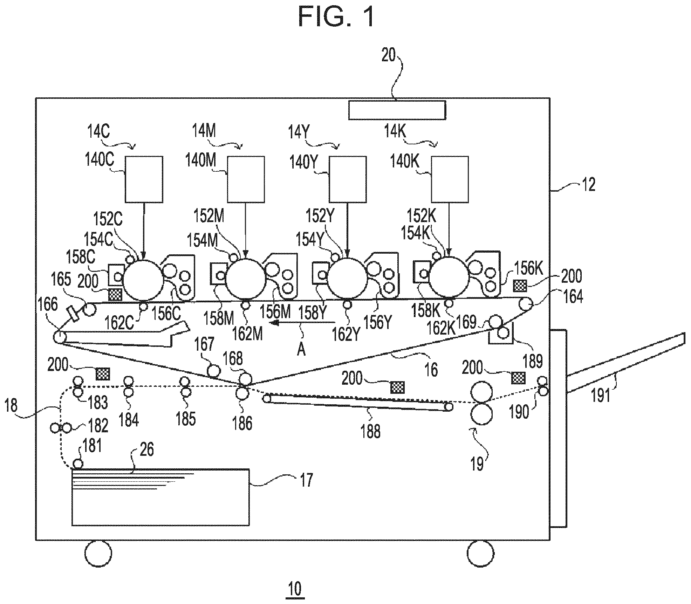

Fig. 1 illustrates the structure of an image forming apparatus 10 according to an exemplary embodiment of the present disclosure. Fig. 1 illustrates the image forming apparatus 10 as viewed from the front side of the image forming apparatus 10. Fig. 1 illustrates the internal structure of the image forming apparatus 10 without an exterior cover 206 or the like.

As illustrated in Fig. 1, the image forming apparatus 10 includes an apparatus body 12. The apparatus body 12 accommodates image forming units 14K, 14Y, 14M, and 14C, an intermediate transfer belt 16, a sheet tray 17, a sheet transport path 18, a fixing device 19, a control device 20, and the like. The image forming apparatus 10 is a multifunction device that serves as a full-color copier and a facsimile machine in addition to a printer that prints image data received from a personal computer (not illustrated) or the like.

In this exemplary embodiment, four image forming units 14K, 14Y, 14M, and 14C corresponding to black (K), yellow (Y), magenta (M), and cyan (C) are arranged horizontally at predetermined intervals along the intermediate transfer belt 16. The four image forming units 14K, 14Y, 14M, and 14C sequentially form toner images, serving as developer images of the respective colors, according to image data input from the control device 20, and transfer (first transfer) the toner images to the intermediate transfer belt 16 at timings at which the toner images are superimposed on one another. The order of color of the image forming units 14K, 14Y, 14M, and 14C is not limited to black, yellow, magenta, and cyan, and any order, such as yellow, magenta, cyan, and black, is possible.

The sheet transport path 18 is disposed below the intermediate transfer belt 16. A recording sheet 26, serving as a recording medium supplied from the sheet tray 17, is transported along the sheet transport path 18. The color toner images that have been transferred in a superimposed manner to the intermediate transfer belt 16 are collectively transferred (referred to as "second transfer") to the recording sheet 26. The transferred toner images are fixed by the fixing device 19, and the recording sheet 26 is discharged outside.

Next, the structure of the image forming apparatus 10 will be described in more detail.

The image forming units 14K, 14Y, 14M, and 14C are arranged horizontally in parallel at predetermined intervals and have the same structure except for the colors of the images to be formed. Hence, the image forming unit 14K will be described below. The image forming units 14 are distinguished by the affixed letters K, Y, M, and C. The image forming units 14K, 14Y, 14M, and 14C may be collectively referred to as "image forming units 14".

The image forming unit 14K includes a photoconductor drum 152K that holds a toner image, an exposure device 140K that irradiates the photoconductor drum 152K with a laser beam according to image data input from the control device 20, a charging device 154K that uniformly charges the photoconductor drum 152K, a developing device 156K that develops an electrostatic image formed on the photoconductor drum 152K, and a cleaning device 158K. An electrostatic latent image formed on the photoconductor drum 152K is developed with black (K) toner by the developing device 156K and transferred to the intermediate transfer belt 16. Residual toner, paper dust, and the like remaining on the photoconductor drum 152K after the transfer of the toner image are removed by the cleaning device 158K.

The other image forming units 14Y, 14M, and 14C also have photoconductor drums 152Y, 152M, and 152C, exposure devices 140Y, 140M, and 140C, charging devices 154Y, 154M, and 154C and developing devices 156Y, 156M, and 156C, and cleaning devices 158Y, 158M, and 158C, respectively, and form yellow (Y), magenta (M), and cyan (C) toner images and transfer the toner images to the intermediate transfer belt 16.

The intermediate transfer belt 16 is an endless belt and is wound around a drive roller 164, idle rolls 165, 166, and 167, a backup roller 168, and an idle roller 169 with a predetermined tension. The drive roller 164 is rotationally driven by a drive motor (not illustrated) so that the intermediate transfer belt 16 circulates at a predetermined speed in the direction of arrow A.

The intermediate transfer belt 16 is provided with first transfer rollers 162K, 162Y, 162M, and 162C, serving as first transfer devices, at positions facing the image forming units 14K, 14Y, 14M, and 14C, respectively. The color toner images formed on the photoconductor drums 152K, 152Y, 152M, and 152C are transferred in a superimposed manner to the intermediate transfer belt 16 by the first transfer rollers 162K, 162Y, 162M, and 162C. The residual toner on the intermediate transfer belt 16 is removed by a cleaning blade or a brush of a belt cleaning device 189 provided downstream of the second transfer position.

A paper feed roller 181 that picks up a recording sheet 26 from the sheet tray 17, roller pairs 182, 183, and 184 for transporting the recording sheet 26, and a registration roller 185 that transports the recording sheet 26 to the second transfer position at a predetermined timing are disposed in the sheet transport path 18.

A second transfer roller 186 pressed against the backup roller 168 and serving as a second transfer device is disposed at the second transfer position in the sheet transport path 18. The color toner images transferred in a superimposed manner to the intermediate transfer belt 16 are second-transferred to the recording sheet 26 by a press-contact force and an electrostatic force of the second transfer roller 186.

The recording sheet 26 to which the color toner images have been transferred is transported to the fixing device 19 by a transport belt 188 and is discharged onto a tray 191 by a discharge roller pair 190.

The fixing device 19 includes a cylindrical heating roller and a cylindrical pressure roller opposed to the heating roller, and applies heat and pressure to the recording sheet 26 to melt and fix the toner to the recording sheet 26.

Drive systems for the image forming units 14, the paper feed roller 181, the roller pairs 182, 183, and 184, the registration roller 185, the second transfer roller 186, the transport belt 188, the fixing device 19, and the discharge roller pair 190 are noise sources that produce operational noise. Hence, noise sensors 200 that acquire (or collect) operational noise of the drive systems, sheets, and the like are provided around the drive systems.

The control device 20 performs image processing, such as tone correction and resolution correction, on image data input from a personal computer or the like (not illustrated) via a network line, such as a local area network (LAN), and outputs the processed image data to the image forming units 14K, 14Y, 14M, and 14C. The control device 20 also detects abnormal noise on the basis of the operational noise acquired from the noise sensors 200 and senses abnormality of the apparatus.

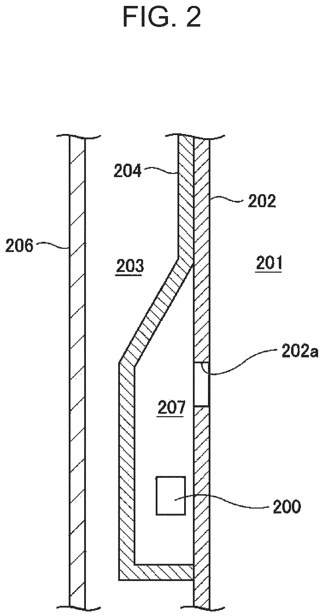

Fig. 2 is a vertical sectional view of a noise sensor 200 and the vicinity thereof as viewed from the side of the image forming apparatus 10.

Noise sources, such as the image forming units 14, the paper feed roller 181, the roller pairs 182, 183, and 184, the registration roller 185, the second transfer roller 186, the transport belt 188, the fixing device 19, and the discharge roller pair 190, are disposed in a space 201 inside a frame 202 constituting the apparatus body 12 (or inside the apparatus body 12). The frame 202 is made of, for example, a metal, and supports the noise sources disposed therein. The frame 202 has an opening 202a communicating with the space 201 accommodating the noise sources.

The opening 202a is covered by an inner cover 204, which is a covering part that covers the opening 202a from the outside of the frame 202. The inner cover 204 is made of, for example, a resin, and has the shape of a part of a polyhedron (a pentahedron in Fig. 2). A noise sensor 200 is disposed in a space 207 between the frame 202 and the inner cover 204, more specifically, in the space 207 formed outside the frame 202 and inside the inner cover 204. In other words, the noise sensor 200 is disposed in the space 207 communicating with the space 201 accommodating the noise source. The noise sensor 200 is disposed at a position where the noise entering through the opening 202a and reflected by the inner cover 204 is collected. Thus, the noise sensor 200 easily collects the noise from the noise source through the opening 202a.

The inner cover 204 is provided so as to cover the noise sensor 200 and the opening 202a at least when viewed from the outside of the apparatus. In other words, at least a portion of the noise sensor 200 facing the outside of the apparatus body 12 (the front side of the image forming apparatus 10 in Fig. 1) is covered by the inner cover 204. Hence, the noise sensor 200 and the opening 202a do not need to be entirely covered, and at least portions thereof facing the outside of the apparatus body 12 need to be covered.

An exterior cover 206 that is opened and closed with respect to the apparatus body 12 (or the frame 202) is provided on the outer side of the inner cover 204. The exterior cover 206 is made of, for example, a resin, and covers the outer side of the inner cover 204. The exterior cover 206 is hinged, and is opened to enable replacement of the photoconductor drums 152 and the like disposed in the apparatus body 12. There is a space 203 between the exterior cover 206 and the inner cover 204.

As described, at least the portion of the noise sensor 200 facing the outside of the apparatus body 12 is covered by the inner cover 204, and the outer side of the inner cover 204 is covered by the exterior cover 206. With this structure, the exterior cover 206 and the inner cover 204 reduce the noise outside the apparatus, making it easy for the noise sensor 200 to collect the noise inside the apparatus body 12 while reducing the influence of the noise outside the apparatus. As a result, it is possible to accurately detect unusual noise, and thus to easily detect abnormality of the apparatus.

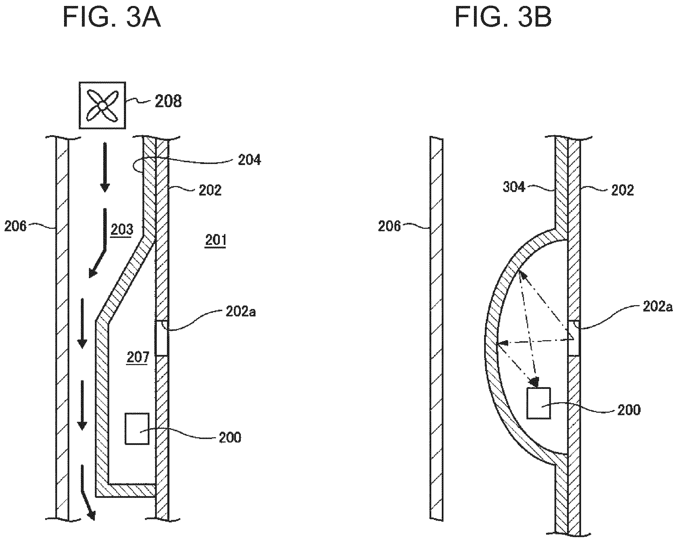

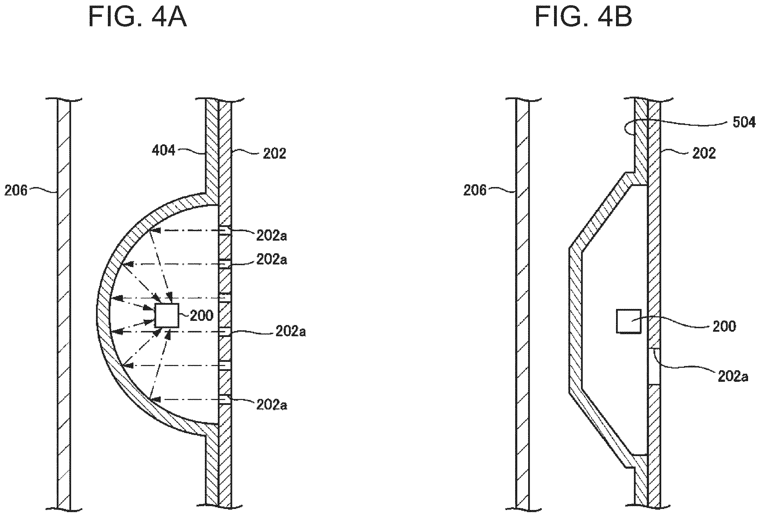

Figs. 3A, 3B, 4A, and 4B illustrate modifications of the noise sensor 200 and the vicinity thereof.

Fig. 3A illustrates a first modification. In this modification, a fan 208 is provided in the space 203 between the inner cover 204 and the exterior cover 206. The atmosphere in the space 203 is discharged to the outside of the apparatus by driving the fan 208. More specifically, by driving the fan 208, the space 203 is used as an air flow path (also referred to as a duct), and the atmosphere in the space 203 is discharged to the outside of the apparatus. Hence, the space 203 serves as a noise barrier that shuts out the noise outside the apparatus. This reduces (or insulates) the noise outside the apparatus, making it easy for the noise sensor 200 to collect the noise inside the apparatus body 12 while reducing the influence of the noise outside the apparatus. As a result, it is possible to cool the inside of the apparatus, to accurately detect unusual noise, and to easily detect abnormality of the apparatus with high layout efficiency.

Fig. 3B illustrates a second modification. In this modification, the shape of an inner cover 304 is different from that of the inner cover 204 described above. The inner cover 304 has a shape that reflects the noise collected through the opening 202a to the noise sensor 200. Specifically, the inner cover 304 is formed to include the shape of a part of an ellipsoid. The noise sensor 200 and the opening 202a are respectively disposed at two focal positions of the inner cover 304 having an ellipsoidal shape. Thus, the noise entering through the opening 202a is reflected by the inner cover 304 and collected by the noise sensor 200. This reduces the noise outside the apparatus, making it easy for the noise sensor 200 to collect the noise inside the apparatus body 12 while reducing the influence of the noise outside the apparatus. As a result, it is possible to accurately detect unusual noise, and thus to easily detect abnormality of the apparatus.

Fig. 4A illustrates a third modification. In this modification, an inner cover 404 is formed to include the shape of a part of a sphere. The frame 202 has multiple openings 202a. The noise sensor 200 is disposed at a focal point (near the center), which is a position where noises entering through the openings 202a and reflected by the spherical inner cover 404 are collected. Thus, the noises entering through the openings 202a are reflected by the inner cover 404 and collected by the noise sensor 200. Also in this case, the same effect as that of the second modification described above is obtained.

Fig. 4B illustrates a fourth modification. In this modification, an inner cover 504 is formed to include the shape of a part of a polyhedron (an octahedron in Fig. 4B). The noise sensor 200 is disposed at a position where the noise entering through the opening 202a and reflected by the polyhedral inner cover 504 is collected. Thus, the noise entering through the opening 202a is reflected by the inner cover 504 and collected by the noise sensor 200. Also in this case, the same effect as that of the second modification described above is obtained.

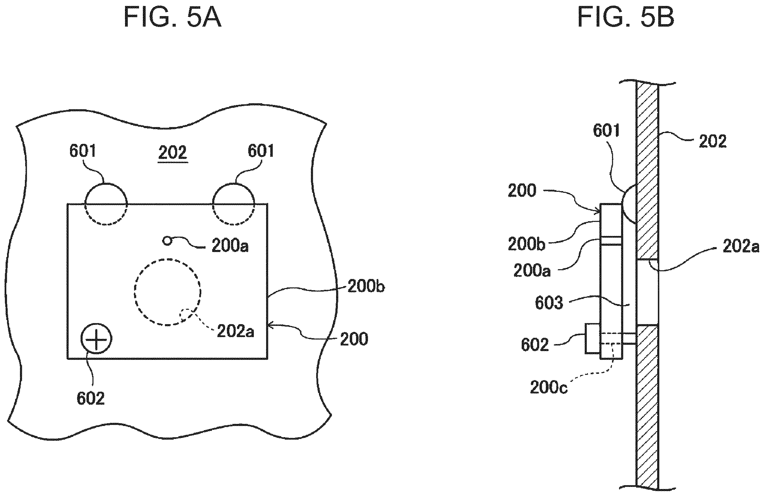

Next, an installation example of a noise sensor 200 will be described with reference to Figs. 5A and 5B. Fig. 5A illustrates the noise sensor 200 and the vicinity thereof as viewed from the front side of the image forming apparatus 10. Fig. 5B illustrates the noise sensor 200 and the vicinity thereof as viewed from the side of the image forming apparatus 10. In Figs. 5A and 5B, the inner cover 204 and the exterior cover 206 are not illustrated.

As described above, the noise sensor 200 is disposed on the outer side of the frame 202, near the opening 202a. The noise sensor 200 includes, for example, a noise collection part 200a that collects noise and a circuit board 200b on which the noise collection part 200a is provided. The circuit board 200b is fixed to the outer side of the frame 202 by bringing the upper inner surface of the circuit board 200b into contact with a spherical projection 601 provided on the outer side of the frame 202, and inserting a screw 602 through a hole 200c provided in the lower part of the circuit board 200b. A space 603 is formed between the frame 202 and the circuit board 200b.

The noise collection part 200a is disposed at a position different from and not overlapping the position of the opening 202a in the frame 202 when viewed from the front side (or the outer side of the apparatus) of the image forming apparatus 10. The noise collection part 200a is disposed at a height different from the height of the opening 202a in the frame 202 when viewed from the side of the image forming apparatus 10. The inner cover 204 is provided so as to cover the opening 202a and the noise collection part 200a at least when viewed from the front side of the image forming apparatus 10 (or the outer side of the apparatus). Furthermore, the exterior cover 206 is provided so as to cover the outer side of the inner cover 204. In this way, the noise outside the apparatus is reduced, making it easy for the noise sensor 200 to collect the noise inside the apparatus while reducing the influence of the noise outside the apparatus. As a result, it is possible to accurately detect unusual noise, and thus to easily detect abnormality of the apparatus.

### Modification

In the above-described exemplary embodiment, the case where the present disclosure is applied to the image forming apparatus 10 has been described. However, the present disclosure is not limited thereto. The present disclosure is also applicable to electronic devices provided with noise sensors.

In the above exemplary embodiment, the inner cover has the shape including a part of an ellipsoid, a part of a sphere, or a part of a polyhedron. However, the present disclosure is not limited thereto. The inner cover may have any shape that reflects the noise collected through the opening 202a to the noise sensor 200.

In the above-described exemplary embodiment, the case where the image forming apparatus includes image forming units corresponding four colors, namely, Y, M, C, and K has been described. However, the present disclosure is not limited thereto and is applicable to a case where the image forming apparatus includes image forming units corresponding four or more colors or a black-and-white (monochrome) image forming unit.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An electronic device comprising:
   a noise source that produces an operational noise;
   a frame accommodating and supporting the noise source and having an opening leading to a space accommodating the noise source;
   a noise sensor that is provided outside the frame and collects noise from the noise source through the opening;
   a covering part covering the noise sensor and the opening at least when viewed from an outside of an apparatus; and
   an exterior cover that covers an outer side of the covering part.
(((2))) The electronic device according to (((1))), wherein a space between the covering part and the exterior cover is used as an air flow path.
(((3))) The electronic device according to (((2))), further comprising a fan that discharges air in the air flow path to the outside of the apparatus.
(((4))) The electronic device according to any one of (((1))) to (((3))), wherein the covering part has a shape that reflects the noise collected through the opening to the noise sensor.
(((5))) The electronic device according to (((4))), wherein the covering part has a shape including a part of an ellipsoid.
(((6))) The electronic device according to (((5))), wherein the noise sensor and the opening are respectively disposed at two focal positions of the covering part having a shape including a part of an ellipsoid.
(((7))) The electronic device according to (((4))), wherein
   the covering part has a shape including a part of a sphere,
   the opening includes a plurality of openings, and
   the noise sensor collects the noise from the noise source through the plurality of openings.
(((8))) The electronic device according to (((4))), wherein the covering part has a shape including a part of a polyhedron.
(((9))) The electronic device according to (((7))) or (((8))), wherein the noise sensor is disposed at a position where the noise entering through the opening and reflected by the covering part is collected.
(((10))) The electronic device according to any one of (((4))) to (((9))), wherein
   the noise sensor includes a noise collection part that collects noise, and
   the noise collection part is disposed at a position different from a position of the opening.

The advantages of the structures described in Appendix will be described below.

According to the electronic device of (((1))), it is possible to reduce the influence of the noise outside the apparatus, compared with the case where the noise sensor is not covered by the covering part provided inside the exterior cover.

According to the electronic device of (((2))), it is possible to reduce the influence of the noise outside the apparatus, compared with the case where the air flow path is not formed between the noise sensor and the exterior cover.

According to the electronic device of (((3))), it is possible to reduce the influence of the noise outside the apparatus while cooling the inside of the apparatus.

According to the electronic device of (((4))), it is easy to collect noise from the noise source, compared with the case where the shape of the covering part is not considered.

According to the electronic device of (((5))), it is easy to collect noise from the noise source, compared with the case where the shape of the covering part is not considered.

According to the electronic device of (((6))), it is easy to collect noise from the noise source, compared with the case where the position where the noise sensor is disposed is not considered.

According to the electronic device of (((7))), it is easy to collect noise from the noise source, compared with the case where the shape of the covering part is not considered.

According to the electronic device of (((8))), it is easy to collect noise from the noise source, compared with the case where the shape of the covering part is not considered.

According to the electronic device of (((9))), it is easy to collect noise from the noise source, compared with the case where the position where the noise sensor is disposed is not considered.

According to the electronic device of (((10))), even when the noise collection part is disposed at a position different from the position of the opening, it is easy to collect the noise from the noise source.

## Claims

1. An electronic device comprising:
a noise source that produces an operational noise;
a frame accommodating and supporting the noise source and having an opening leading to a space accommodating the noise source;
a noise sensor that is provided outside the frame and collects noise from the noise source through the opening;
a covering part covering the noise sensor and the opening at least when viewed from an outside of an apparatus; and
an exterior cover that covers an outer side of the covering part.

2. The electronic device according to claim 1, wherein a space between the covering part and the exterior cover is used as an air flow path.

3. The electronic device according to claim 2, further comprising a fan that discharges air in the air flow path to the outside of the apparatus.

4. The electronic device according to any one of claims 1 to 3, wherein the covering part has a shape that reflects the noise collected through the opening to the noise sensor.

5. The electronic device according to any one of claims 1 to 4, wherein the covering part has a shape including a part of an ellipsoid.

6. The electronic device according to any one of claims 1 to 5, wherein the noise sensor and the opening are respectively disposed at two focal positions of the covering part having a shape including a part of an ellipsoid.

7. The electronic device according to any one of claims 1 to 6, in particular claim 4, wherein
the covering part has a shape including a part of a sphere,
the opening includes a plurality of openings, and
the noise sensor collects the noise from the noise source through the plurality of openings.

8. The electronic device according to any one of claims 1 to 4, wherein the covering part has a shape including a part of a polyhedron.

9. The electronic device according to any one of claims 1 to 8, in particular claim 7 or 8, wherein the noise sensor is disposed at a position where the noise entering through the opening and reflected by the covering part is collected.

10. The electronic device according to any one of claims 1 to 9, in particular claims 4 to 9, wherein
the noise sensor includes a noise collection part that collects noise, and
the noise collection part is disposed at a position different from a position of the opening.
